# DEMANDE DE BREVET EUROPEEN

(11) **EP 4 570 456 A1**
(43) Date de publication de la demande: **18.06.2025**
(21) Numéro de dépôt: 24218781.3
(22) Date de dépôt: 10.12.2024
(51) Int. Cl.: B25J 19/00, B25J 21/02

(54) **MANCHE DE PROTECTION POUR L INSERTION D'UN BRAS MANIPULATEUR RACCORDÉ DE MANIÈRE ÉTANCHE AVEC UN EFFECTEUR LOGÉ DANS L ENCEINTE CONFINÉ D'UNE BOÎTE À GANTS, BOÎTE À GANTS ASSOCIÉE**

(30) Priorité: 14.12.2023 FR 2314235
(71) Demandeur: Commissariat à l'Energie Atomique et aux Energies Alternatives, 75015 Paris (FR); Getinge Life Science France, 41100 Vendôme (FR)
(72) Inventeur: NANTERMOZ, Coline, 91191 Gif-sur-Yvette Cedex (FR); PERROT, Yann, 91191 Gif-sur-Yvette Cedex (FR); KAMMERER, Nolwenn, 91191 Gif-sur-Yvette Cedex (FR); MONNEROT, François, 41400 Saint Georges-sur-Cher (FR)
(74) Mandataire: Cabinet Nony

(57) **Abrégé**

Manche de protection pour l'insertion d'un bras manipulateur raccordé de manière étanche avec un effecteur logé dans l'enceinte confiné d'une boîte à gants, Boîte à gants associée.

L'invention consiste essentiellement en une manche de protection (1) pour l'insertion d'un bras manipulateur (6) dans une boîte à gants (12), comprenant un raccord étanche (4) permettant de fixer et de connecter de manière amovible le bras manipulateur, enfilé dans la manche de protection, avec un effecteur (7), logé dans l'enceinte confinée d'une boîte à gants.

## Description

### Domaine technique

La présente invention concerne le domaine des boites à gants, et plus particulièrement les manches de protection pour l'insertion étanche d'un bras dans une boîte à gants afin de manipuler des éléments contenus dans l'enceinte confinée de la boîte à gants.

### Technique antérieure

Une boîte à gants est une enceinte hermétique dont au moins une de ses parois est transparente, l'enceinte hermétique étant adaptée pour manipuler des substances et des objets dans une atmosphère contrôlée. Les boîtes à gants sont particulièrement intéressantes lorsque les substances ou objets à manipuler sont nocifs pour l'homme ou sont contaminables, comme c'est le cas, par exemple, dans les domaines nucléaire, chimique, pharmaceutique et médical.

Une boîte à gants comporte au moins une ouverture traversante ménagée dans une de ses parois et dans laquelle un manchon souple est destiné à être monté de manière étanche, afin d'accéder aux produits et aux matériels présents à l'intérieur de la boîte à gants. Le manchon souple garantit le maintien d'une atmosphère contrôlée au sein de l'enceinte en formant une barrière hermétique à travers laquelle les éléments contenus dans l'enceinte peuvent être manipulés.

Usuellement, le manchon souple est un gant pour recevoir une main d'un opérateur. Toutefois, la manipulation d'éléments contenus dans une boîte à gants à l'aide d'un gant reste dangereuse pour un opérateur.

En effet, il existe des risques d'accidents pouvant rompre l'étanchéité de la boîte à gants et donc exposer l'opérateur aux éléments nocifs qui y sont contenus. Notamment, il existe le risque de percer le gant, lors d'une manipulation.

Bien que la boîte à gants soit opaque pour les rayonnements alpha et bêta, les rayonnements gamma peuvent quant à eux être transmis à travers le gant. Aussi, les boîtes à gants utilisant un gant comme manchon souple ne présentent pas une protection optimale pour la manipulation d'éléments radioactifs par un opérateur.

En outre, certaines tâches de manipulation d'éléments contenus dans une boîte à gants par un opérateur sont rébarbatives, par exemple les tâches de maintenance préventive et de nettoyage. La réalisation de ces tâches par un opérateur diminue le temps de travail disponible pour d'autres tâches présentant une plus haute valeur ajoutée.

Afin de surmonter au moins une partie des inconvénients précités, un bras manipulateur, par exemple un bras robotique ou un bras esclave d'un télémanipulateur, peut être utilisé pour la manipulation d'éléments contenus dans une boîte à gants.

Pour autant, les boîtes à gants standards ne sont pas adaptées pour l'implantation d'un bras manipulateur entièrement à l'intérieur de leur enceinte. En particulier, l'intérieur des boîtes à gants est généralement exigu et peut être encombré de nombreux objets. De plus, un bras manipulateur peut ne pas être adapté pour supporter l'atmosphère confinée des boîtes à gants, qui peut notamment être corrosive, poussiéreuse et/ou radioactive. Par ailleurs, la maintenance d'un bras manipulateur agencé entièrement à l'intérieur d'une boîte à gants s'avérerait très complexe.

Il est donc préférable de disposer le bras manipulateur hors de la boîte à gants et de l'insérer dans le manchon souple, qui est le cas échéant une manche de protection du bras manipulateur, afin de manipuler les éléments au sein de la boîte à gants.

A l'instar d'un gant, la manche de protection garantit le maintien d'une atmosphère contrôlée au sein de la boîte à gants en formant une barrière hermétique entre l'intérieur de la boîte et le bras manipulateur. En outre, la manche de protection protège le bras manipulateur contre l'atmosphère confinée.

WO 2021/053598 A1 décrit une manche de protection pour l'insertion d'un bras robotique dans une boîte à gants. L'extrémité fermée de la manche de protection a la forme d'un U pour recouvrir l'effecteur du bras robotique, sous la forme d'une pince, dans la manche de protection. La manche de protection n'est donc adaptée que pour l'utilisation d'une pince comme effecteur du bras robotique.

Lors de la manipulation d'un élément contenu dans l'enceinte confinée d'une boîte à gants, la manche de protection décrite par WO 2021/053598 A1 forme une paroi entre l'effecteur et l'élément, ce qui diminue la sensibilité et la dextérité de l'effecteur. Notamment, la qualité du retour d'effort de l'effecteur est dégradée. La manche de protection étant en contact direct avec les éléments contenus dans la boîte à gants, il y a un risque non négligeable de déchirure de celle-ci et donc de rupture du confinement de l'atmosphère contrôlée. De même, la manche de protection peut être déformée par l'effecteur, par exemple pincée ou marquée, ce qui risque de la percer.

En outre, en recouvrant entièrement le bras robotique et l'effecteur, la manche de protection décrite par WO 2021/053598 A1 entrave grandement la liberté de mouvement du bras robotique et de l'effecteur. Notamment, la manche de protection tourne simultanément avec l'effecteur lors d'une rotation de ce dernier autour de son axe longitudinal par rapport au reste du bras robotique, cette rotation étant très utile pour les actions de vissage et de dévissage. Cet enroulement de la manche de protection augmente davantage le risque de déchirement.

EP 3 498 438 A1 décrit un soufflet de protection pour l'insertion d'un bras robotique dans une boîte à gants, un effecteur sous forme de pince étant fixé en bout du soufflet de protection avec un mécanisme d'actionnement logé dans le soufflet de protection. Ainsi, le bras robotique peut s'enfiler dans le soufflet de protection et se connecter avec le mécanisme d'actionnement de sorte à contrôler les mouvements de la pince dans la boîte à gants.

Cependant, le soufflet de protection décrit par EP 3 498 438 A1 présente de nombreux inconvénients. Notamment, ce soufflet est limité à un unique effecteur qui ne peut pas être changé ou remplacé. D'autre part, l'effecteur fixé au soufflet n'est pas libre en rotation autour de son axe longitudinal, ce qui empêche tout opération de vissage et de dévissage par le bras robotique. De plus, le soufflet n'est pas adapté pour des débattements importants du bras robotique.

Il existe donc un besoin d'amélioration des manches de protection pour l'insertion étanche d'un bras manipulateur dans une boîte à gants, notamment qui pallie les inconvénients précités.

Le but de l'invention est de répondre, au moins en partie, à ce(s) besoin(s).

### Exposé de l'invention

Pour ce faire, l'invention concerne une manche de protection pour l'insertion d'un bras manipulateur dans une boîte à gants, comprenant :
- un manchon souple et hermétique,
- une bague support montée de manière étanche sur une extrémité ouverte du manchon, la bague support étant adaptée pour fixer de manière étanche le manchon à une bague d'enceinte de la boîte à gants,
- un embout fermant de manière étanche l'extrémité du manchon opposée à l'extrémité ouverte, comprenant :
   - une bague d'embout fixe par rapport au manchon,
   - un raccord emboîté dans la bague d'embout en étant mobile en rotation infinie autour de l'axe central de la bague d'embout, comportant une face interne, logée dans le manchon et configurée pour se fixer de manière amovible à l'extrémité du bras manipulateur, et une face externe, agencée hors du manchon et configurée pour se fixer de manière amovible à un effecteur.

Par « *bras manipulateur* », on entend un bras mécanique articulé pour la manipulation d'éléments contenus dans la boîte à gants, le bras étant commandé manuellement ou informatiquement. Notamment, le bras manipulateur peut être téléopéré, télécommandé, programmé hors ligne et/ou opéré axe par axe via une interface homme-machine. Par exemple, le bras manipulateur peut être un bras robotique ou un bras esclave d'un télémanipulateur.

Par « *effecteur* »*,* on entend un outil destiné à être monté à l'extrémité d'un bras manipulateur pour lui permettre de réaliser certaines applications en interagissant directement avec un élément contenu dans une boîte à gants. Par exemple, l'effecteur peut être un outil de préhension, notamment une pince, ou un outil électroportatif.

De préférence, une portion du manchon à son extrémité ouverte est un soufflet.

De préférence, le manchon est translucide sur au moins une partie de sa longueur, de préférence sur toute sa longueur.

De préférence, le manchon est en polyuréthane ou en polychlorure de vinyle.

De préférence, l'embout comprend une flasque rigide et transparente avec un pourtour extérieur fixé de manière étanche au manchon et un pourtour intérieur fixé de manière étanche à la bague d'embout.

De préférence, le manchon comprend une portion tronconique à son extrémité fermée, la bague d'embout étant fixée directement au sommet de la portion tronconique.

De préférence, la manche de protection comprend au moins une jonction tournante joignant de manière étanche deux portions du manchon entre elles, les deux portions étant mobiles en rotation infinie l'une par rapport à l'autre autour de l'axe longitudinal du manchon.

De préférence, le raccord comprend des pions internes faisant saillie de la face interne et étant destinés à s'insérer dans des rainures creusées dans une plaque de verrouillage du bras manipulateur afin de fixer le bras manipulateur avec le raccord.

De préférence, le raccord comprend des pions externes faisant saillie de la face externe et étant destinés à s'insérer dans des rainures creusées dans une plaque de verrouillage d'effecteur afin de fixer l'effecteur avec le raccord.

De préférence, le raccord comprend un connecteur s'étendant de la face interne à la face externe afin de connecter électriquement le bras manipulateur avec l'effecteur.

De préférence, le connecteur est une carte électronique avec des pistes faisant saillie de la face interne d'une part et faisant saillie de la face externe d'autre part.

De préférence, l'embout comprend un roulement à billes agencé entre le raccord et la bague d'embout en entourant le raccord de manière coaxiale.

La présente invention porte également sur un ensemble pour la manipulation d'éléments contenus dans une boîte à gants, comprenant :
- une manche de protection selon la présente invention,
- un bras manipulateur configuré pour s'enfiler dans la manche de protection en se fixant de manière amovible sur la face interne du raccord,
- au moins un effecteur configuré pour se fixer de manière amovible sur la face externe du raccord.

De préférence, le raccord comprend des pions internes faisant saillie de la face interne, le bras manipulateur comprenant une plaque de verrouillage comprenant des rainures chacune comportant une partie d'insertion adaptée pour insérer un des pions internes et une partie de fixation dans le prolongement de la partie d'insertion et étant adaptée pour fixer le bras manipulateur au raccord par translation du pion interne depuis la partie d'insertion, de préférence la plaque de verrouillage étant adaptée pour coulisser entre une position de verrouillage dans laquelle les pions internes sont dans la partie de fixation des rainures jusqu'à une position de désengagement dans laquelle les pions internes sont dans la partie d'insertion des rainures.

De préférence, le raccord comprend des pions externes faisant saillie de la face externe, l'effecteur comprenant une plaque de verrouillage comprenant des rainures chacune comportant une partie d'insertion adaptée pour insérer un des pions externes et une partie de fixation dans le prolongement de la partie d'insertion et étant adaptée pour fixer l'effecteur au raccord par translation du pion externe depuis la partie d'insertion, de préférence la plaque de verrouillage étant adaptée pour coulisser entre une position de verrouillage dans laquelle les pions externes sont dans la partie de fixation des rainures jusqu'à une position de désengagement dans laquelle les pions externes sont dans la partie d'insertion des rainures.

La présente invention a également pour objet une boîte à gants comprenant :
- une enceinte hermétique comprenant une ouverture traversante ménagée dans une de ses parois, une bague d'enceinte étant fixée sur le bord de l'ouverture,
- un ensemble selon la présente invention, la manche de protection étant fixée de manière étanche à la bague d'enceinte, l'effecteur étant logé dans l'enceinte hermétique.

La présente invention consiste donc essentiellement en une manche de protection comprenant un raccord étanche permettant de fixer et de connecter de manière amovible un bras manipulateur, enfilé dans la manche de protection, avec un effecteur, logé dans l'enceinte confinée d'une boîte à gants.

L'invention permet ainsi de s'affranchir d'une enveloppe autour de l'effecteur formant une paroi entre les éléments à manipuler et l'effecteur. La sensibilité et la dextérité de l'effecteur ne sont alors pas diminuées et les risques de déchirement de la manche de protection et donc de rupture du confinement de l'enceinte hermétique sont minimisés.

De plus, la manche de protection selon l'invention permet le raccordement facile d'un bras manipulateur avec des effecteurs variés tout en conservant l'étanchéité de l'atmosphère confinée. Le même bras manipulateur et la même manche de protection peuvent ainsi être utilisés pour différentes applications nécessitant différents effecteurs, sans devoir retirer ledit bras manipulateur et ladite manche de protection de l'enceinte.

Grâce à la manche de protection selon l'invention, le bras manipulateur n'est pas immergé ni mis en contact avec l'atmosphère confinée de la boîte à gants. Il est donc protégé d'une possible contamination et/ou corrosion. On minimise ainsi les déchets produits lors d'une manipulation d'éléments contenus dans la boîte à gants, seuls la manche de protection et l'effecteur étant à considérer comme des déchets jetables après manipulations. En outre, la manche de protection selon l'invention est constituée de matériaux compatibles pour le traitement de déchet classique du domaine du nucléaire, elle est notamment exempte d'aluminium.

Par ailleurs, la manche de protection laisse un maximum de liberté de mouvements pour le bras manipulateur infiltré en son sein. En particulier, la manche de protection n'entrave pas une rotation de l'effecteur autour de son axe longitudinal par rapport au bras manipulateur, ce qui facilite grandement les actions de vissage et de dévissage.

La manche de protection selon l'invention est également adaptée aux boîtes à gants déjà existantes et ne nécessite donc pas de modification de ces dernières pour la mise en place de la manche de protection. Notamment, le montage du manchon et de la bague support dans une bague d'enceinte peut être similaire à ceux déjà existants pour le montage d'un gant dans l'ouverture d'une boîte à gants. En particulier, il peut être conforme aux standards existants selon la norme ISO 11933-1.

La manche de protection selon l'invention est simple et rapide à mettre en place sur une boîte à gants. Elle est adaptée pour venir remplacer un gant ou une autre manche de protection sans rompre le confinement de l'atmosphère contrôlée.

### Brève description des dessins

D'autres avantages et caractéristiques ressortiront mieux à la lecture de la description détaillée, faite à titre illustratif et non limitatif, en référence aux figures suivantes :
[Fig 1] La figure 1 est une vue schématique de côté d'une manche de protection selon la présente invention.
[Fig 2A] et [Fig 2B] Les figures 2A et 2B sont des vues schématiques de côté d'une manche de protection selon la présente invention avec un bras robotique enfilé dedans et raccordé à un effecteur sous forme de pince.
[Fig 3] La figure 3 est une vue schématique de côté d'une boîte à gants selon la présente invention.
[Fig 4] La figure 4 est une vue en coupe longitudinale d'un embout d'une manche de protection selon l'invention.
[Fig 5] La figure 5 est une photographie d'un embout d'une manche de protection selon l'invention prise du côté de la face externe du raccord.
[Fig 6A] La figure 6A est une vue en coupe longitudinale d'un embout d'une manche de protection selon l'invention avec un bras robotique et un effecteur raccordés au raccord de l'embout, les plaques de verrouillage du bras robotique et de l'effecteur étant en position de verrouillage du raccordement.
[Fig 6B] La figure 6B est une vue en coupe longitudinale d'un embout d'une manche de protection selon l'invention avec un bras robotique et un effecteur raccordés au raccord de l'embout, les plaques de verrouillage du bras robotique et de l'effecteur étant en une position permettant le désengagement des pions internes et externes du raccord.
[Fig 7] La figure 7 est une vue en coupe transversale du raccordement d'un effecteur avec l'embout d'une manche de protection selon l'invention, la plaque de verrouillage de l'effecteur étant en position de verrouillage du raccordement.
[Fig 8] La figure 8 est une vue en perspective d'un embout d'une manche de protection selon l'invention raccordé avec un bras robotique et un effecteur, l'embout, le bras robotique et l'effecteur étant coupés longitudinalement.
[Fig 9] La figure 9 est une vue schématique de côté d'une manche de protection selon la présente invention avec un bras robotique enfilé dedans, la manche de protection comprenant une jonction tournante.
[Fig 10] La figure 10 est une photographie d'une manche de protection selon la présente invention, le manchon de la manche de protection comprenant une portion tronconique à son extrémité fermée, la bague d'embout étant fixée directement au sommet de la portion tronconique.

### Description détaillée

Pour des raisons de clarté, les différents éléments des figures sont représentés en échelle libre, les dimensions réelles des différentes parties n'étant pas nécessairement respectées.

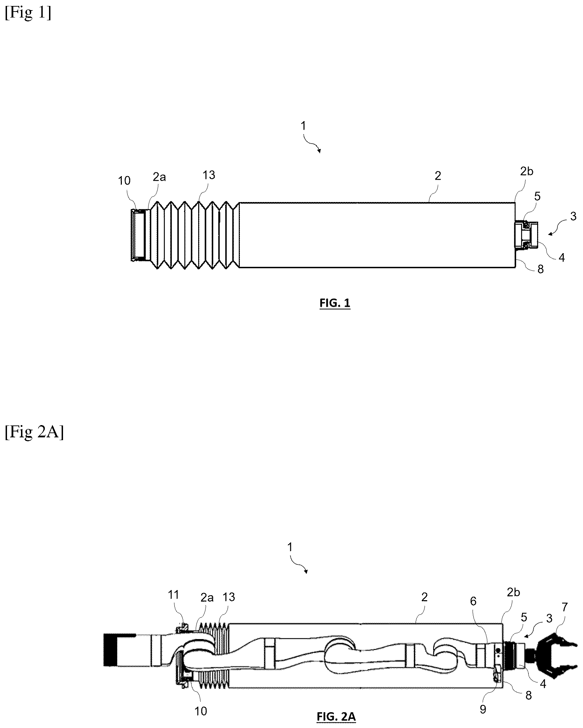

On a illustré à la figure 1 une manche de protection 1 selon la présente invention. La manche de protection 1 comprend un manchon 2 souple et hermétique ouvert à son extrémité 2a et fermé à son autre extrémité 2b.

La souplesse du manchon 2 permet de ne pas contraindre les mouvements d'un bras manipulateur. En particulier, le manchon 2 peut être en polyuréthane ou en polychlorure de vinyle. Ces matériaux en plus d'être souples et hermétiques ont l'avantage de présenter une bonne résistance au déchirement.

De préférence, le manchon 2 est translucide. Il est ainsi possible d'observer le bras manipulateur enfilé dans le manchon 2 ce qui facilite son pilotage et sa manipulation. Notamment, un opérateur appréhende mieux la configuration articulaire du bras manipulateur lors d'une téléopération.

Une surmanche peut être emmanchée autour du manchon 2 afin de réduire davantage le risque de perçage ou de déchirement du manchon 2.

La manche de protection 1 comprend également un embout 3 fermant de manière étanche l'extrémité 2b du manchon 2. L'embout 3 comprend un raccord 4 emboîté de manière étanche dans une bague d'embout 5 en étant mobile en rotation autour de l'axe central de la bague d'embout 5.

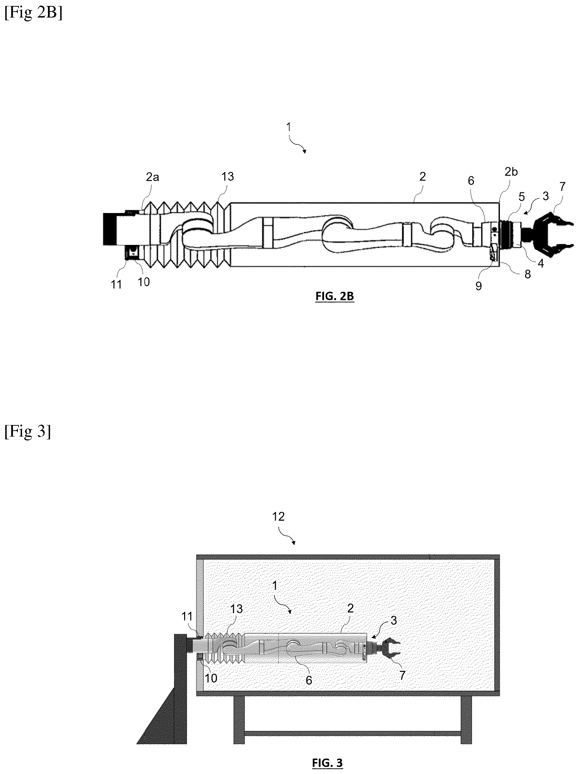

Comme cela est illustré aux figures 2A et 2B, le raccord 4 est adapté pour raccorder mécaniquement et connecter électriquement l'extrémité d'un bras robotique 6 enfilé dans la manche de protection 1 avec un effecteur 7. L'architecture ainsi que le fonctionnement du raccord 4 seront expliqués ultérieurement.

Le bras robotique 6 peut être un robot six ou sept axes, par exemple un « Kinova Gen3 » commercialisé par la société Kinova.

L'embout 3 comprend également une flasque 8 dont le pourtour extérieur est fixé de manière étanche à l'extrémité 2b du manchon 2 et le pourtour intérieur fixe de manière étanche la bague d'embout 5 au manchon 2.

De préférence, la flasque 8 est rigide et transparente. Par exemple, la flasque 8 est en polychlorure de vinyle rigide, notamment cristal. Ainsi, le bras robotique 6 peut comprendre un module caméra 9 à son extrémité raccordée au raccord 4 pour observer l'intérieur de la boîte à gants 12 à travers la flasque 8.

Un tel agencement de caméra est préférable aux agencements connus de l'art antérieur. Par exemple, une caméra fixée dans l'enceinte hermétique d'une boîte à gants a souvent le champ de vision obstrué et est difficilement accessible pour des opérations de maintenance. Une caméra montée à l'extérieur de la boîte à gants et observant son intérieur à travers une de ses parois transparentes a souvent un mauvais point de vue pour suivre une opération de manipulation.

La manche de protection 1 comprend également une bague support 10 fixée de manière étanche à l'extrémité ouverte 2a du manchon 2. Comme cela est illustré à la figure 3, la bague support 10 est adaptée pour s'emmancher dans une bague d'enceinte 11 d'une boîte à gants 12 de sorte à fixer de manière étanche le manchon 2 à la bague d'enceinte 11. Le montage étanche du manchon 2 avec la bague d'enceinte 11 grâce à la bague support 10 peut être selon les standards existants selon la norme ISO 11933-1.

Ainsi, la manche de protection 1 est adaptée aux boîtes à gants 12 déjà existantes et ne nécessite donc pas de modification de ces dernières 12 pour sa mise en place. De plus, les procédés de mise en place et de remplacement de la manche de protection 1 sont simples et similaires à ceux déjà connus de l'art antérieur pour les gants de boîte à gants 12. Ils peuvent être réalisés sans rupture du confinement de l'atmosphère contrôlée de la boîte à gants 12, notamment à l'aide d'un canon d'éjection.

La portion du manchon 2 à son extrémité ouverte 2a est, de préférence, un soufflet 13. Comme cela est illustré aux figures 2A et 2B, le soufflet 13 autorise, en se déployant ou se repliant, d'avancer ou de reculer le bras robotique 6 dans la boîte à gants 12 sans risque de déchirement du manchon 2. Le bras robotique 6 peut ainsi être plus ou moins enfoncé dans la boîte à gants 12 en fonction de l'opération de manipulation voulue. Ainsi, pour une opération plus au moins profonde dans la boîte à gants 12, c'est-à-dire plus ou moins proche de la paroi, seulement certains axes du bras robotique 6 peuvent être insérés similairement à un opérateur qui soit insère seulement sa main et son poignet soit insère son bras jusqu'à l'épaule dans une boîte à gants en fonction de la profondeur des opérations à réaliser.

En outre, le soufflet 13 augmente la liberté de mouvement du bras robotique 6 enfilé dans la manche de protection 1. Le soufflet 13 permet également d'éviter une mise en tension trop importante du manchon 2 en cas d'enroulement de ce dernier par le bras robotique 6 autour de son axe central.

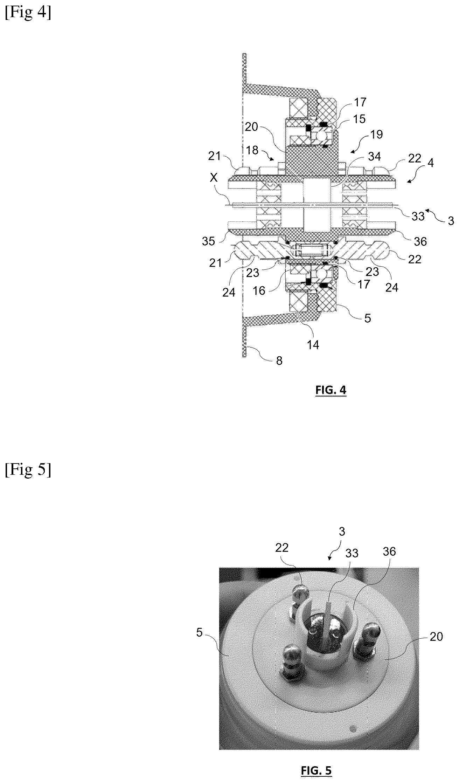

On a illustré aux figures 4 et 5 un embout 3 d'une manche de protection 1 selon l'invention. L'embout 3 comprend le raccord 4 emboité de manière étanche dans la bague d'embout 5, elle-même 5 fixée de manière étanche à la flasque 8. Notamment, la bague d'embout 5 est fixée sur la flasque 8 par pincement à l'aide d'un écrou 14. Alternativement, la bague d'embout 5 peut être fixée directement sur le manchon 2 de manière similaire ou le manchon 2 peut comprend un bourrelet logé compressé dans la bague d'embout 5.

Le raccord 4 est mobile en rotation infinie par rapport à la bague d'embout 5 autour de son axe central X. En particulier, l'embout 3 comprend un roulement à billes étanche 15 agencé entre le raccord 4 et la bague d'embout 5. Un anneau 16 entoure le raccord 4 pour maintenir en butée le roulement à billes 5. Des joints toriques 17 garantissent l'étanchéité entre le raccord 4 et le roulement à billes 15 et entre le roulement à billes 15 et la bague d'embout 5.

Le raccord 4 comprend une face interne 18 agencée dans la manchon 2 et une face externe 19 opposée à la face interne 18 et hors du manchon 2. Le raccord 4 comprend un corps tubulaire 20 auquel sont fixés des pions internes 21, faisant saillie hors du corps 20 du côté de la face interne 18, et des pions externes 22, faisant saillie hors du corps 20 du côté de la face externe 19. Des joints toriques 23 assurent l'étanchéité de la fixation des pions internes 21 et des pions externes 22 avec le corps 20.

Par exemple, les pions internes 21, respectivement les pions externes 22, sont répartis en triangle. Chacun des pions internes 21 et des pions externes 22 a la forme d'une quille, c'est-à-dire a une forme cylindrique s'étendant parallèlement à l'axe central X et comprenant une gorge radiale 24.

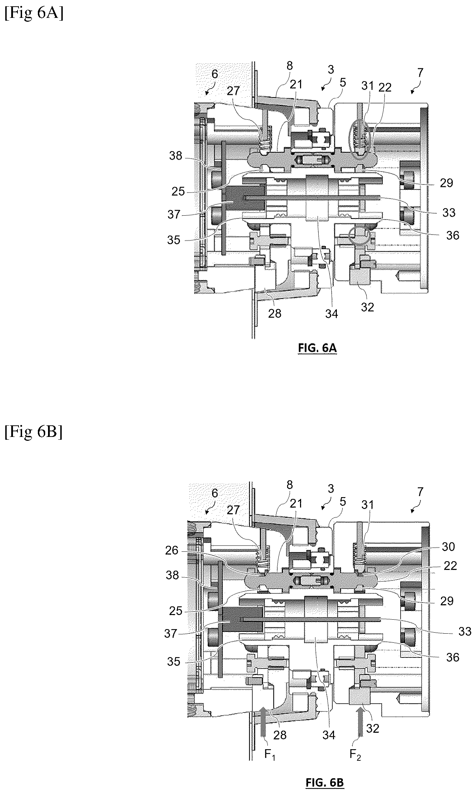

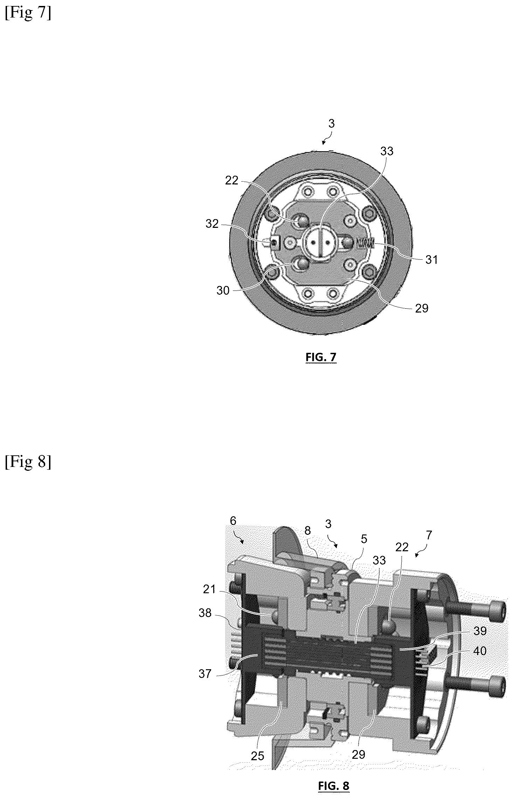

Comme cela est illustré aux figures 6A, 6B et 7, les pions internes 21 permettent de fixer de manière amovible l'extrémité du bras robotique 6 sur la face interne 18 du raccord 4, et, les pions externes 22 permettent de fixer de manière amovible l'effecteur 7 sur la face externe 19 du raccord 4.

Le bras robotique 6 comprend une plaque de verrouillage 25 montée coulissante à son extrémité. La plaque de verrouillage 25 comprend des rainures 26 traversantes. Chaque rainure 26 comprend une partie d'insertion de section plus large que celle des pions internes 21 et une partie de fixation dans le prolongement de la partie d'insertion et dont la section est de forme complémentaire avec la gorge radiale 24 des pions internes 21.

Ainsi, les pions internes 21 peuvent s'engager dans les rainures 26 à travers la partie d'insertion, puis la plaque de verrouillage 25 peut coulisser orthogonalement à l'axe central X de sorte que les pions internes 21 translatent dans les rainures 26 jusqu'à leur insertion dans la partie de fixation des rainures 26. Une fois en butée dans la partie de fixation des rainures 26, les pions internes 21 sont bloqués par la plaque de verrouillage 25. Le bras robotique 6 est alors fixé au raccord 4. On a illustré aux figures 6A la plaque de verrouillage 25 dans sa position de blocage des pions internes 21 en butée dans la partie de fixation des rainures 26.

Le bras robotique 6 comprend également un ressort hélicoïdal 27 qui maintient en effort de rappel la plaque de verrouillage 25 en position de verrouillage, c'est-à-dire avec les pions internes 21 insérés en butée dans la partie de fixation des rainures 26. Le ressort hélicoïdal 27 assure ainsi le blocage des pions internes 21 par la plaque de verrouillage 25.

Le déblocage des pions internes 21 est réalisé en coulissant la plaque de verrouillage 25 orthogonalement à l'axe central X, ce qui comprime le ressort hélicoïdal 27, de sorte que les pions internes 21 translatent dans les rainures 26 jusqu'à leur insertion dans la partie d'insertion des rainures 26. Les pions internes 21 peuvent ensuite être désengagés hors des rainures 26. Le bras robotique 6 n'est alors plus fixé au raccord 4.

Le coulissement de la plaque de verrouillage 25 peut être actionné à l'aide d'un bouton poussoir 28. Le bouton poussoir 28 peut être agencé en vis-à-vis du ressort hélicoïdal 27.

On a illustré à la figure 6B la plaque de verrouillage 25 dans sa position de mise en compression du ressort hélicoïdal 27 avec les pions internes 21 dans la partie d'insertion des rainures 26. La flèche Fi symbolise la force de poussée appliquée au bouton poussoir 28 pour faire coulisser la plaque de verrouillage 25.

Similairement, l'effecteur 7 comprend une plaque de verrouillage 29 montée coulissante à une de ses extrémités. La plaque de verrouillage 29 comprend des rainures 30 traversantes. Chaque rainure 30 comprend une partie d'insertion de section plus large que celle des pions externes 22 et une partie de fixation dans le prolongement de la partie d'insertion et dont la section est de forme complémentaire avec la gorge radiale 24 des pions externes 22.

Ainsi, les pions externes 22 peuvent s'engager dans les rainures 30 à travers la partie d'insertion, puis la plaque de verrouillage 29 peut coulisser orthogonalement à l'axe central X de sorte que les pions externes 22 translatent dans les rainures 30 jusqu'à leur insertion dans la partie de fixation des rainures 30. Une fois en butée dans la partie de fixation des rainures 30, les pions externes 22 sont bloqués par la plaque de verrouillage 29. L'effecteur 7 est alors fixé au raccord 4. On a illustré aux figures 6A et 7 la plaque de verrouillage 29 dans sa position de blocage des pions externes 22 en butée dans la partie de fixation des rainures 30.

L'effecteur 7 comprend également un ressort hélicoïdal 31 qui maintient en effort de rappel la plaque de verrouillage 29 en position de verrouillage, c'est-à-dire avec les pions externes 22 insérés en butée dans la partie de fixation des rainures 30. Le ressort hélicoïdal 31 assure ainsi le blocage des pions externes 22 par la plaque de verrouillage 29.

Le déblocage des pions externes 22 est réalisé en coulissant la plaque de verrouillage 29 orthogonalement à l'axe central X, ce qui comprime le ressort hélicoïdal 31, de sorte que les pions externes 22 translatent dans les rainures 30 jusqu'à leur insertion dans la partie d'insertion des rainures 30. Les pions externes 22 peuvent ensuite être désengagés hors des rainures 30. L'effecteur 7 n'est alors plus fixé au raccord 4.

Le coulissement de la plaque de verrouillage 29 peut être actionné à l'aide d'un bouton poussoir 32. Le bouton poussoir 32 peut être agencé en vis-à-vis du ressort hélicoïdal 31.

On a illustré à la figure 6B la plaque de verrouillage 29 dans sa position de mise en compression du ressort hélicoïdal 31 avec les pions externes 22 dans la partie d'insertion des rainures 30. La flèche F₂ symbolise la force de poussée appliquée au bouton poussoir 32 pour faire coulisser la plaque de verrouillage 29.

La boîte à gants 12 peut également comprendre une station porte-effecteurs sur laquelle plusieurs effecteurs différents peuvent être déposés et pour faciliter l'assemblage d'un effecteur 7 avec le raccord 4.

Comme cela est illustré aux figures 4 à 7, le raccord 4 comprend également un connecteur 33 logé dans l'ouverture traversante du corps tubulaire 20 en s'étendant de la face interne 18 à la face externe 19. Le connecteur 33 est solidaire avec le corps 20.

Le connecteur 33 illustré aux figures 4 à 7 est une carte électronique. Alternativement, toute sorte de connecteur étanche adapté pour transmettre de la puissance électrique et des données par signaux électriques est envisageable pour le connecteur 33, par exemple le connecteur 33 peut être un connecteur étanche commercialisé par la société Souriau.

Un joint 34 assure l'étanchéité entre le connecteur 33 dans le corps tubulaire 20, l'ouverture traversante du corps tubulaire 20 étant ainsi fermée de manière étanche. Le joint 34 peut être formé par coulage silicone dans l'espace entre le connecteur 33 et le corps 20.

Le corps 20 comprend une portion de guidage interne 35 et une portion de guidage externe 36 s'étendant en périphérie du connecteur 33 en faisant saillie à la face interne 18, respectivement à la face externe 19. Les portions de guidage interne 35 et externe 36 ont la forme de manchon fendu.

Le connecteur 33 est configuré pour transmettre des signaux électriques entre le bras robotique 6 et l'effecteur 7. On a illustré à la figure 8 le bras robotique 6 connecté électriquement avec l'effecteur 7 par l'intermédiaire du connecteur 33.

Le bras robotique 6 est raccordé au raccord 4 et comprend une fiche femelle 37 dans laquelle est enfiché le connecteur 33. Dans le mode de réalisation illustré à la figure 8, la fiche 37 est soudée à une carte électronique 38 du bras robotique 6.

Similairement, l'effecteur 7 est raccordé au raccord 4 et comprend une fiche femelle 39 dans laquelle est enfiché le connecteur 33. Dans le mode de réalisation illustré à la figure 8, la fiche 39 est soudée à une carte électronique 40 de l'effecteur 7.

Ainsi, une fois le bras robotique 6 et l'effecteur 7 raccordés à l'embout 3, ils 6, 7, sont connectés électriquement ensemble et le bras robotique 6 peut commander l'effecteur 7.

La portion de guidage interne 35, respectivement la portion de guidage externe 36, protège mécaniquement le connecteur 33 lors du raccordement du bras robotique 6, respectivement de l'effecteur 7, avec le raccord 4 en guidant la fiche 37, respectivement la fiche 39.

Dans le mode de réalisation illustré à la figure 8, c'est le connecteur 33 qui s'enfiche dans les fiches femelles 37 et 38. Alternativement, les fiches 37 et/ou 38 peuvent être des fiches mâles qui s'enfichent dans le connecteur 33.

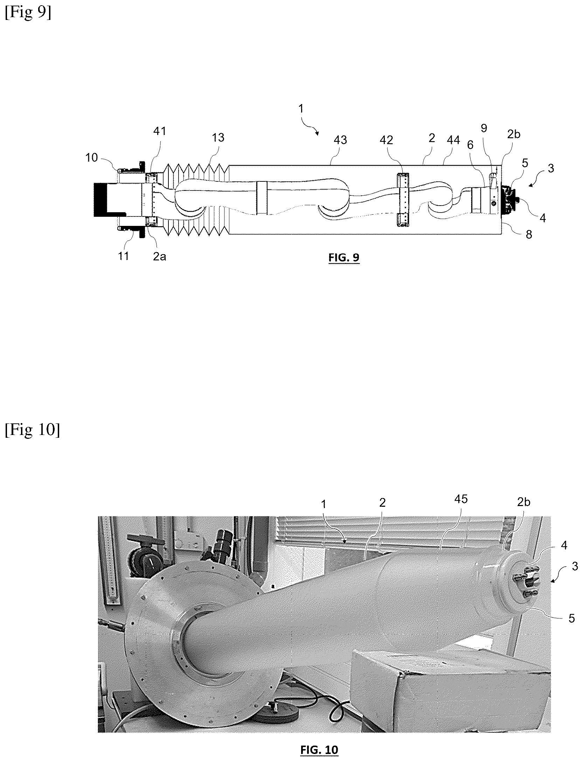

On a illustré à la figure 9 un autre mode de réalisation d'une manche de protection 1 selon la présente invention. La manche de protection 1 illustrée à la figure 9 diffère de celle illustrée aux figures 2A et 2B en ce qu'elle comprend des première 41 et deuxième 42 jonctions tournantes. La première jonction tournante 41 est montée sur le manchon 2 à son extrémité 2a. La deuxième jonction tournante 42 est montée sur le manchon 2 en divisant ce dernier en une portion proximale 43, allant de la première jonction tournante 41 à la deuxième jonction tournante 42, et une portion distale 44, allant de la deuxième jonction tournante 42 à l'extrémité fermée 2b.

La première jonction tournante 41 joint de manière étanche l'extrémité 2a du manchon 2 avec la portion proximale 43 tout en autorisant une rotation infinie, autour de l'axe longitudinal du manchon 2, de la portion proximale 43 par rapport à l'extrémité 2a du manchon 2.

La deuxième jonction tournante 42 joint de manière étanche la portion proximale 43 avec la portion distale 44 tout en autorisant une rotation infinie, autour de l'axe longitudinal du manchon 2, de la portion distale 44 par rapport à la portion proximale 43.

Avantageusement, les première 41 et deuxième 42 jonctions tournantes augmentent la liberté de mouvement du bras robotique 6 enfilé dans la manche de protection 1. Notamment, les première 41 et deuxième 42 jonctions tournantes empêchent que le manchon 2 s'enroule sur lui-même lors d'une rotation du bras robotique 6.

On a illustré à la figure 10 un autre mode de réalisation d'une manche de protection 1 selon la présente invention. La manche de protection 1 illustrée à la figure 10 diffère de celle illustrée aux figures 2A et 2B en ce qu'elle est exempte de flasque 8 et exempte de soufflet 13. L'absence de flasque 8 et de soufflet 13 simplifie la fabrication d'une manche de protection 1 selon l'invention et facilite l'insertion de ladite manche de protection 1 dans une boîte à gants 12. L'absence de soufflet 13 diminue également le risque d'une accumulation potentielle de contamination sur le manchon 2.

Le manchon 2, illustré à la figure 10, comprend une portion tronconique 45 à son extrémité fermée 2b. La bague d'embout 5 est fixée directement au sommet de la portion tronconique 45, par exemple par pincement comme décrit précédemment pour la figure 4.

D'autres variantes et améliorations peuvent être envisagées sans pour autant sortir du cadre de l'invention. Par exemple, il est envisageable que le raccord 4 comprenne une plaque de verrouillage interne, à la place des pions internes 21, adaptée pour fixer un bras manipulateur comprenant des pions en saillie, et/ou, une plaque de verrouillage externe à la place des pions externes 22, adaptée pour fixer un effecteur comprenant des pions en saillie, le fonctionnement des plaques de verrouillage interne et externe étant similaire au fonctionnement des plaques de verrouillage 25 et 29.

## Revendications

1. Manche de protection (1) pour l'insertion d'un bras manipulateur (6) dans une boîte à gants (12), comprenant :
- un manchon (2) souple et hermétique,
- une bague support (10) montée de manière étanche sur une extrémité ouverte (2a) du manchon, la bague support étant adaptée pour fixer de manière étanche le manchon à une bague d'enceinte (11) de la boîte à gants,
- un embout (3) fermant de manière étanche l'extrémité (2b) du manchon opposée à l'extrémité ouverte, comprenant :
• une bague d'embout (5) fixe par rapport au manchon,
• un raccord (4) emboîté dans la bague d'embout en étant mobile en rotation infinie autour de l'axe central (X) de la bague d'embout, comportant une face interne (18), logée dans le manchon et configurée pour se fixer de manière amovible à l'extrémité du bras manipulateur, et un face externe (19), agencée hors du manchon et configurée pour se fixer de manière amovible à un effecteur (7).

2. Manche de protection selon la revendication 1, une portion du manchon à son extrémité ouverte étant un soufflet (13).

3. Manche de protection selon l'une des revendications précédentes, le manchon étant translucide sur au moins une partie de sa longueur, de préférence sur toute sa longueur.

4. Manche de protection selon l'une des revendications précédentes, le manchon étant en polyuréthane ou en polychlorure de vinyle.

5. Manche de protection selon l'une des revendications précédentes, l'embout comprenant une flasque (8) rigide et transparente avec un pourtour extérieur fixé de manière étanche au manchon et un pourtour intérieur fixé de manière étanche à la bague d'embout.

6. Manche de protection selon l'une des revendications 1 à 4, le manchon comprenant une portion tronconique (45) à son extrémité fermée, la bague d'embout étant fixée directement au sommet de la portion tronconique.

7. Manche de protection selon l'une des revendications précédentes, comprenant au moins une jonction tournante (42) joignant de manière étanche deux portions (43, 44) du manchon entre elles, les deux portions étant mobiles en rotation infinie l'une par rapport à l'autre autour de l'axe longitudinal du manchon.

8. Manche de protection selon l'une des revendications précédentes, le raccord comprenant des pions internes (21) faisant saillie de la face interne et étant destinés à s'insérer dans des rainures (26) creusées dans une plaque de verrouillage (25) du bras manipulateur afin de fixer le bras manipulateur avec le raccord.

9. Manche de protection selon l'une des revendications précédentes, le raccord comprenant des pions externes (22) faisant saillie de la face externe et étant destinés à s'insérer dans des rainures (30) creusées dans une plaque de verrouillage (29) d'effecteur afin de fixer l'effecteur avec le raccord.

10. Manche de protection selon l'une des revendications précédentes, le raccord comprenant un connecteur (33) s'étendant de la face interne à la face externe afin de connecter électriquement le bras manipulateur avec l'effecteur, de préférence le connecteur étant une carte électronique avec des pistes faisant saillie de la face interne d'une part et faisant saillie de la face externe d'autre part.

11. Manche de protection selon l'une des revendications précédentes, l'embout comprenant un roulement à billes (15) agencé entre le raccord et la bague d'embout en entourant le raccord de manière coaxiale.

12. Ensemble pour la manipulation d'éléments contenus dans une boîte à gants (12), comprenant :
- une manche de protection (1) selon l'une des revendications précédentes,
- un bras manipulateur (6) configuré pour s'enfiler dans la manche de protection en se fixant de manière amovible sur la face interne (18) du raccord (4),
- au moins un effecteur (7) configuré pour se fixer de manière amovible sur la face externe (19) du raccord.

13. Ensemble selon la revendication précédente, le raccord comprenant des pions internes (21) faisant saillie de la face interne, le bras manipulateur comprenant une plaque de verrouillage (25) comprenant des rainures (26) chacune comportant une partie d'insertion adaptée pour insérer un des pions internes et une partie de fixation dans le prolongement de la partie d'insertion et étant adaptée pour fixer le bras manipulateur au raccord par translation du pion interne depuis la partie d'insertion, de préférence la plaque de verrouillage étant adaptée pour coulisser entre une position de verrouillage dans laquelle les pions internes sont dans la partie de fixation des rainures jusqu'à une position de désengagement dans laquelle les pions internes sont dans la partie d'insertion des rainures.

14. Ensemble selon la revendication 12 ou 13, le raccord comprenant des pions externes (22) faisant saillie de la face externe, l'effecteur comprenant une plaque de verrouillage (29) comprenant des rainures (30) chacune comportant une partie d'insertion adaptée pour insérer un des pions externes et une partie de fixation dans le prolongement de la partie d'insertion et étant adaptée pour fixer l'effecteur au raccord par translation du pion externe depuis la partie d'insertion, de préférence la plaque de verrouillage étant adaptée pour coulisser entre une position de verrouillage dans laquelle les pions externes sont dans la partie de fixation des rainures jusqu'à une position de désengagement dans laquelle les pions externes sont dans la partie d'insertion des rainures.

15. Boîte à gants (12) comprenant :
- une enceinte hermétique comprenant une ouverture traversante ménagée dans une de ses parois, une bague d'enceinte (11) étant fixée sur le bord de l'ouverture,
- un ensemble selon l'une des revendications 12 à 14, la manche de protection étant fixée de manière étanche à la bague d'enceinte, l'effecteur étant logé dans l'enceinte hermétique.
